# EUROPEAN PATENT SPECIFICATION

(11) **EP 4 554 827 B1**
(45) Date of publication and mention of the grant of the patent: **01.04.2026**
(21) Application number: 23739683.3
(22) Date of filing: 28.06.2023
(51) Int. Cl.: B60T 13/14, B60T 13/66

(54) **A SYSTEM AND METHOD FOR GENERATING HYDRAULIC PRESSURE TO ACTUATE A MOTOR-VEHICLE BRAKING SYSTEM**
SYSTEM UND VERFAHREN ZUR ERZEUGUNG VON HYDRAULISCHEM DRUCK ZUM BETREIBEN EINES KRAFTFAHRZEUG-BREMSSYSTEMS
SYSTÈME ET PROCÉDÉ DE GÉNÉRATION DE PRESSION HYDRAULIQUE POUR ACTIONNER UN SYSTÈME DE FREINAGE DE VÉHICULE AUTOMOBILE

(30) Priority: 12.07.2022 IT 202200014596
(43) Date of publication of application: 21.05.2025
(73) Proprietor: Stellantis Europe S.p.A., 10135 Torino (TO) (IT)
(72) Inventor: BADINO, Renato, 10135 Torino (IT); IELUZZI, Michele, 10043 Orbassano (Torino) (IT)
(74) Representative: Buzzi, Notaro & Antonielli d'Oulx S.p.A.
(86) International application number: PCT/IB2023/056687
(87) International publication number: WO 2024/013599

(56) References cited:
- DE-A1- 102008 039 306
- US-A1- 2014 028 084
- US-A1- 2018 065 609
- US-A1- 2020 114 894
- US-A1- 2022 041 150
- US-A1- 2022 055 593
- US-A1- 2022 105 914

## Description

### TEXT OF THE DESCRIPTION

### Field of the invention

The present invention generally relates to the field of motor-vehicle braking systems. In particular, the invention has been developed with reference to systems for generating the hydraulic pressure for actuating brake devices of the wheels of a motor-vehicle.

### Prior art

In the field of braking systems for vehicles, it is known to provide systems for actuating and modulating the hydraulic pressure, based on the pressure increase in the hydraulic circuit due to actuation of the brake pedal. The pressure is then transferred to the brake devices (brake calipers or drum) by the hydraulic circuit itself.

A conventional solution, for example, described in the document CN103318162A, envisages the use of a vacuum brake booster which acts on a brake system pump, amplifying the force exerted on the brake pedal by the driver.

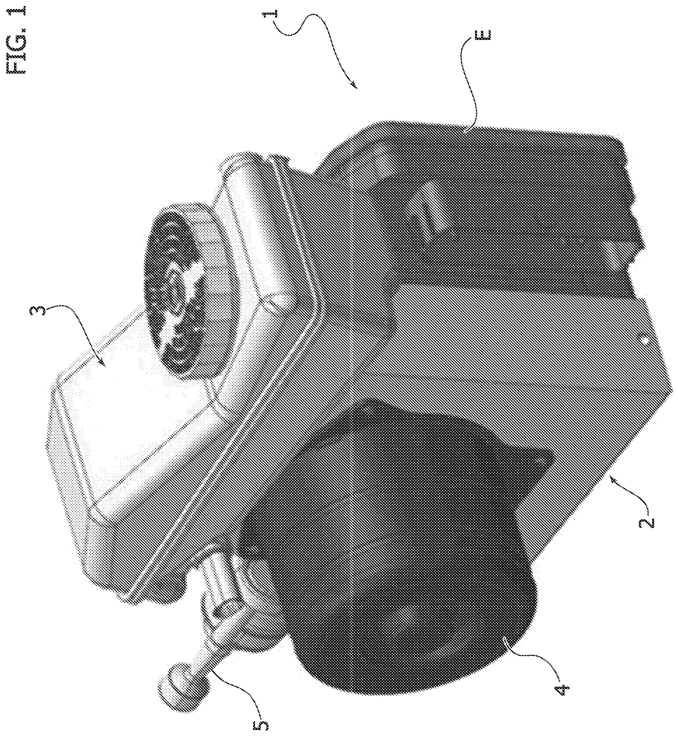

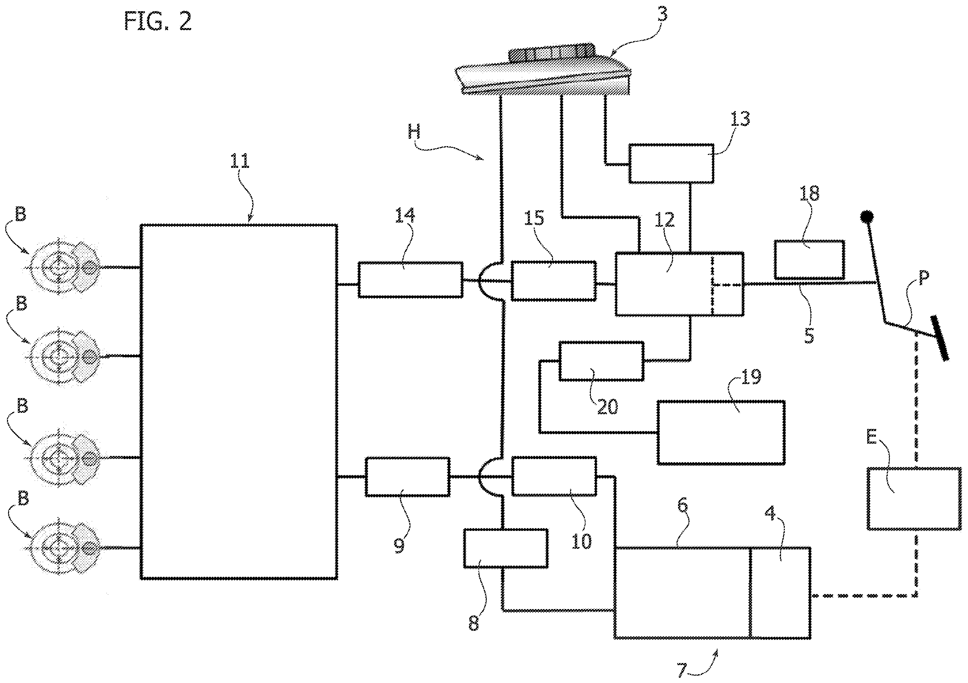

An additional known solution is illustrated in Figures 1, 2. These figures illustrate a hydraulic pressure actuation and modulation system integrated in a single unit, according to an architecture called "One Box", which is currently particularly widespread for electric propulsion vehicles.

The expression "One Box" derives from the fact that the functions typically performed by the vacuum brake booster and the ESC control unit of the conventional solutions described above are incorporated in a single unit. The "One Box" solution, in addition to generating the braking pressure, is able to modulate the above for each wheel in poor grip conditions.

Figure 1 is a perspective view illustrating an embodiment example of a known solution according to the "One Box" architecture. Reference 1 indicates a single hydraulic and electromechanical unit for generating and modulating the hydraulic braking pressure for actuating the brakes of a motor-vehicle. Figure 2 is a diagram illustrating the components and operation of the unit 1.

The hydraulic and electromechanical unit 1 comprises a fluid reservoir 3, a hydraulic unit 2 operatively in communication with the fluid reservoir 3 according to the following description, an electronic control unit E, a connecting rod 5 with a pedal brake P, and an electric motor 4 operatively connected to an electromechanical actuator 6.

Figure 2 illustrates an operating diagram of the system with the known type "One Box" architecture. The motor-vehicle on which the system is installed comprises at least one manually actuation element, such as a brake pedal P, operatively connected to an electronic control unit E, to transmit a braking action request to said electronic control unit E by means of the actuation of the pedal element P.

The system further comprises an actuator assembly 7 hydraulically connected by means of a hydraulic circuit H to the fluid reservoir 3 and to the brake devices B of the vehicle, such as a disc brake caliper or a drum. The actuator assembly 7 comprises an electromechanical actuator 6 which can be operated by the electric motor 4, in order to direct the pressurized fluid towards the brake devices B of the wheels of the motor-vehicle. The electronic control unit E is operatively connected to the actuator assembly 7 and is programmed so as to be able to selectively actuate the brake devices B by means of the actuation of the actuator assembly 7.

The reference 8 indicates a valve operatively connected and interposed between the fluid reservoir 3 and the actuator assembly 7. This valve 8 is in the normally open position to allow the passage of fluid towards the actuator assembly 7 and thus keep the hydraulic circuit H under pressure. The system also comprises a control valve 9 operatively interposed between the actuator assembly 7 and the brake devices B of the wheels of the motor-vehicle. In one or more embodiments, a sensor 10 is arranged upstream of the control valve 9, which detects the passage of fluid under pressure from the actuator assembly 7 towards the valve 9, and allows the valve 9 to open to let the fluid flow under pressure towards the brake devices B of the wheels of the motor-vehicle.

In one or more embodiments, the system comprises a further hydraulic circuit 11 interposed between the control valve 9 and the brake devices B, configured to modulate the fluid pressure generated upstream towards the respective wheels, according to the actual grip of the motor-vehicle on the ground. The details relating to said further hydraulic circuit 11 are not illustrated as they can be made according to techniques widely known to the expert in the sector.

The known type of "One Box" architecture also envisages an auxiliary safety system for generating hydraulic braking pressure in the case of failure/malfunctioning of the electric motor 4 and/or of the electromechanical actuator 6. This auxiliary safety system takes the form of a connecting rod 5 with the brake pedal B, in order to comply with the legislative/approval requirements envisaged in the event of the aforesaid failure. The system therefore comprises a further actuator 12 directly connected to the brake pedal B by means of said connecting rod 5. The system also comprises a further valve 13 interposed between the fluid reservoir 3 and the further actuator 12, wherein the valve 13 is configured in the normally open position to allow the outflow of the fluid in the part of the circuit H relating to the auxiliary safety system. The system also comprises an additional valve 14 arranged downstream of the further actuator 12 and interposed between said further actuator 12 and the further circuit 11 for distributing the operating pressure to the respective brake devices B of the wheels of the motor-vehicle. The valve 14 can also be associated with a sensor 15 that detects the passage of fluid from the actuator 12, allowing the opening of the additional valve 14 to direct the pressurized fluid towards the further hydraulic circuit 11 and, therefore, towards the brake devices B of the motor-vehicle wheels. The system also comprises a brake pedal simulator device 19 operatively in communication with the further actuator 12, arranged to simulate the force/stroke of the brake pedal P. A normally open valve 20 is interposed between the simulator device 19 and the further actuator 12, which can be switched to the closed position to isolate the simulator device 19 in the event of the aforesaid failure.

In the light of the above, during operation, in the case of failure of the electric motor 4 and/or of the electromechanical actuator 6, the hydraulic actuation pressure of the brakes is directed by means of the auxiliary safety system defined by the direct mechanical connection between the brake pedal P and the further actuator 12, created by means of the connecting rod 5. The hydraulic pressure generated corresponds to the stroke of the brake pedal P detected by a special sensor 18.

However, the use of such "One Box" architectures is not without its own drawbacks.

In the first place, the solution described above comprises a rod for mechanical connection to the brake pedal, as it is necessary to comply with the legislative/approval requirements which are envisaged in the case of failure of the electro-hydraulic part described above. This solution, due to the constraint of the direct mechanical connection with the brake pedal, obliges the installation of the single electromechanical hydraulic unit in the motor compartment downstream of the pedal unit, thus making the mounting specific for left-hand drive or right-hand drive vehicles. All this translates into a disadvantage in terms of cost and complexity, as the production of vehicles will have to be differentiated according to the type of drive. Therefore, these solutions have the limitation of having to respond to legislative/approval requirements, to the detriment of the simplicity of implementation and cost reduction. Document US 2014/028084 A1 discloses a further system provided with fluid pump to generate pressure in the system.

An alternative solution, in this sense, would be useful for seeking the best compromise between maximum fulfillment of the legislative/approval requirements and reducing costs, without compromising operational reliability.

### Object of the invention

The object of the invention is to solve the previously mentioned technical problems. In particular, the object of the invention is to provide a solution for generating the hydraulic pressure for actuating the brakes of a motor-vehicle braking system, complying with the legislative/approval requirements, together with the simplicity of construction and the relative cost reduction.

### Summary of the invention

The object of the present invention is achieved by a system having the characteristics forming the subject of the claims that follow, which form an integral part of the technical disclosure given here in relation to the invention.

### Brief description of the figures

The invention will now be described with reference to the attached figures, provided purely by way of non-limiting example, wherein:
- Figure 1 illustrates a known solution of systems for generating the hydraulic pressure for actuating the brakes of a motor-vehicle, according to the "One Box" architecture,
- Figure 2 is an operating diagram of the solution illustrated in Figure 1, and
- Figure 3 illustrates an operating diagram of a system for generating the hydraulic pressure for actuating the brakes, according to the present invention.

### Detailed description of more embodiments

In the following description various specific details are illustrated aimed at a thorough understanding of examples of one or more embodiments. The embodiments can be implemented without one or more of the specific details, or with other methods, components, materials, etc. In other cases, known structures, materials, or operations are not shown or described in detail to avoid obscuring various aspects of the embodiments. The reference to "an embodiment" in the context of this description indicates that a particular configuration, structure or characteristic described in relation to the embodiment is included in at least one embodiment. Therefore, phrases such as "in an embodiment", possibly present in different places of this description do not necessarily refer to the same embodiment. Moreover, particular conformations, structures or characteristics can be combined in a suitable manner in one or more embodiments and/or associated with the embodiments in a different way from that illustrated here, for example, a characteristic here exemplified in relation to a figure may be applied to one or more embodiments exemplified in a different figure.

The references illustrated here are only for convenience and do not, therefore, delimit the field of protection or the scope of the embodiments.

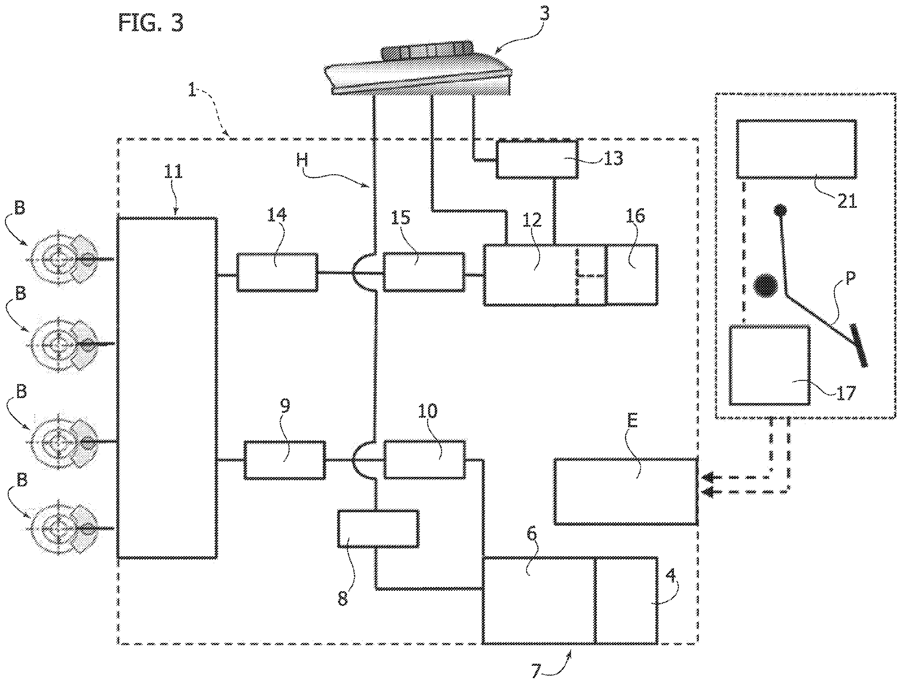

Figures 1, 2 have already been described with reference to the conventional technique according to the "One Box" architecture. Figure 3 illustrates an operating diagram of a system for generating the hydraulic pressure for actuating the brakes of a motor-vehicle braking system, according to the present invention. In Figure 3, the components in common with the conventional technique are indicated with the same references.

Based on the invention, an alternative solution of an auxiliary safety system is proposed for generating the hydraulic braking pressure in the case of failure of the electric motor 4 and/or of the actuator 6.

In this regard, the system with "One Box" architecture according to the invention comprises an auxiliary electric motor 16 operatively connected to an auxiliary actuator 12, wherein the auxiliary electric motor 16 and the auxiliary actuator 12 are integrated within the casing defining the single electromechanical hydraulic unit 1.

Compared to known solutions, there is, therefore, no direct mechanical connection between the brake pedal P and the auxiliary actuator 12.

According to the present invention, the electronic control unit E is configured and programmed to send an activation signal to the auxiliary electric motor 16, in the case of failure of the actuator assembly 7, to generate the hydraulic pressure and direct the pressurized fluid towards the brake devices B of the wheels of the motor-vehicle, without the provision of a direct mechanical connection between the brake pedal P and the auxiliary actuator 12. The reference 17 indicates a position sensor for detecting the position of the brake pedal P and communicating this position to the electronic control unit E. The position sensor 17 is operatively connected to a brake pedal feel simulator 21.

During operation, following the movement of the pedal P, with a given pedal stroke detected by the position sensor 17, the electronic control unit E determines - in a predetermined way - the corresponding hydraulic pressure corresponding to the detected pedal stroke. The electronic control unit E therefore receives a position signal of the pedal P and controls the actuation of the electric motor M which develops the aforesaid corresponding hydraulic actuation pressure through the actuator 6. The hydraulic circuit H, already described in Figure 2, allows the outflow of hydraulic fluid towards the brake devices B of the wheels of the motor-vehicle.

In the case of failure of the actuator assembly 7 detected by the electronic control unit E, the electronic control unit, having received the position signal of the brake pedal P, sends a command signal to operate the auxiliary electric motor 16, so as to operate the auxiliary actuator 12. Consequently, the operating pressure generated flows towards the brake devices B of the wheels of the motor-vehicle by means of the valve 14, which is opened to allow the passage of hydraulic fluid under pressure.

Of course, the details of construction and the embodiments can be widely varied with respect to those described and illustrated, without thereby departing from the scope of the present invention as defined by the claims that are attached.

## Claims

1. A system for generating hydraulic actuation pressure of brake devices (B) of a motor-vehicle braking system, comprising:
- a hydraulic circuit (H) connectable to the brake devices (B) of the motor-vehicle,
- a fluid reservoir (3) connected to said hydraulic circuit (H),
- an actuator assembly (7) comprising an electromechanical actuator (6) operated by an electric motor (4) operatively connected to said electromechanical actuator (6), wherein said actuator assembly (7) is hydraulically in communication with said fluid reservoir (3) and the brake devices (B), wherein said actuator assembly (7) is provided for directing fluid pressure towards the brake devices (B),
- an electronic control unit (E) operatively connected to a brake pedal (P) of the motor-vehicle, configured to receive a signal relating to the pedal stroke of the brake pedal (P) and to control said electric motor (4) for generating a corresponding hydraulic pressure,
- an auxiliary safety system for generating hydraulic pressure in the case of failure of said electric motor (4) and/or said electromechanical actuator (6),
- wherein said hydraulic circuit (H), said fluid reservoir (3), said actuator assembly (7), said electronic control unit (E) and said auxiliary safety system are integrated in a single hydraulic and electromechanical unit (1), referred to as "One Box", configured to generate and modulate the brake hydraulic pressure,
said system being **characterized in that** the auxiliary safety system comprises:
- an auxiliary electric motor (16) operatively connected to an auxiliary actuator (12),
- wherein said auxiliary electric motor (16) and said auxiliary actuator (12) are integrated within said single hydraulic and electromechanical unit (1), hydraulically communicating through said hydraulic circuit (H) with said fluid reservoir (3) and the brake devices (B),
- wherein, in the event of said failure, the electronic control unit (E) is configured and programmed to send a command signal to said auxiliary electric motor (16) to generate a hydraulic pressure for actuating the brake devices (B) corresponding to said pedal stroke, without the aid of a direct mechanical connection between the auxiliary actuator (12) and the brake pedal (P).

2. A system according to claim 1, comprising a position sensor (17) for detecting the position of the brake pedal (P) and communicating this position to the electronic control unit (E), wherein said electronic control unit (E) is programmed and configured to determine the hydraulic pressure to be generated corresponding to the detected pedal stroke.

3. A system according to claim 1, comprising a control valve (9) operatively interposed between the actuator assembly (7) and the brake devices (B), associated with a sensor (10) arranged to detect passing of fluid under pressure from the actuator assembly (7) to the control valve (9) and to enable opening of the control valve (9).

4. A system according to claim 3, comprising a further hydraulic circuit (11) interposed between the control valve (9) and the brake devices (B), configured to modulate the fluid pressure generated upstream towards the respective motor-vehicle wheels, according to the actual grip of the motor-vehicle on the ground.

5. A motor-vehicle comprising a braking system and a system for generating hydraulic actuation pressure according to claim 1.

6. A method for generating hydraulic pressure for actuating brake devices (B) of a motor-vehicle braking system, comprising the following steps:
- providing a system according to claim 1,
- detecting a pedal stroke of the brake pedal (P) following the actuation of the brake pedal (P),
- automatically determining a corresponding operating hydraulic pressure to be generated;
- in the case of failure of said actuator assembly (7), controlling said auxiliary electric motor (16) to generate said corresponding hydraulic pressure and directing the fluid under pressure towards the brake devices (B) of the motor-vehicle wheels.

## Patentansprüche

1. Ein System zum Erzeugen eines hydraulischen Betätigungsdrucks für Bremsvorrichtungen (B) eines Kraftfahrzeug-Bremssystems, umfassend:
- einen hydraulischen Kreislauf (H), der mit den Bremsvorrichtungen (B) des Kraftfahrzeugs verbindbar ist,
- einen Fluidbehälter (3), der mit besagtem hydraulischen Kreislauf (H) verbunden ist,
- eine Stellglied-Baugruppe (7), umfassend ein elektromechanisches Stellglied (6), das von einem Elektromotor (4) betrieben wird, der mit besagtem elektromechanischen Stellglied (6) wirkverbunden ist, wobei besagte Stellglied-Baugruppe (7) hydraulisch mit besagtem Fluidbehälter (3) und den Bremsvorrichtungen (B) in Verbindung steht, wobei besagte Stellglied-Baugruppe (7) zum Lenken des Fluiddrucks zu den Bremsvorrichtungen (B) vorgesehen ist,
- eine elektronische Steuereinheit (E), die mit einem Bremspedal (P) des Kraftfahrzeugs wirkverbunden ist, konfiguriert zum Empfangen eines Signals bezüglich des Pedalhubs des Bremspedals (P) und zum Steuern besagten Elektromotors (4) zum Erzeugen eines entsprechenden hydraulischen Drucks,
- ein Hilfssicherheitssystem zum Erzeugen von hydraulischem Druck im Falle eines Ausfalls besagten Elektromotors (4) und/oder besagten elektromechanischen Stellglieds (6),
- wobei besagter hydraulischer Kreislauf (H), besagter Fluidbehälter (3), besagte Stellglied-Baugruppe (7), besagte elektronische Steuereinheit (E) und besagtes Hilfssicherheitssystem in einer einzigen hydraulischen und elektromechanischen Einheit (1), bezeichnet als "One Box", integriert sind, konfiguriert zum Erzeugen und Modulieren des Bremshydraulikdrucks,
wobei besagtes System **dadurch gekennzeichnet ist, dass** das Hilfssicherheitssystem umfasst:
- einen Hilfselektromotor (16), der mit einem Hilfsstellglied (12) wirkverbunden ist,
- wobei besagter Hilfselektromotor (16) und besagtes Hilfsstellglied (12) innerhalb besagter einziger hydraulischer und elektromechanischer Einheit (1) integriert sind, hydraulisch durch besagten hydraulischen Kreislauf (H) mit besagtem Fluidbehälter (3) und den Bremsvorrichtungen (B) in Verbindung stehen,
- wobei im Falle besagten Ausfalls die elektronische Steuereinheit (E) konfiguriert und programmiert ist, ein Befehlssignal an besagten Hilfselektromotor (16) zu senden, um einen hydraulischen Druck zum Betätigen der Bremsvorrichtungen (B) entsprechend besagtem Pedalhub zu erzeugen, ohne die Hilfe einer direkten mechanischen Verbindung zwischen dem Hilfsstellglied (12) und dem Bremspedal (P).

2. System nach Anspruch 1, umfassend einen Positionssensor (17) zum Erfassen der Position des Bremspedals (P) und Übermitteln dieser Position an die elektronische Steuereinheit (E), wobei besagte elektronische Steuereinheit (E) programmiert und konfiguriert ist, den zu erzeugenden hydraulischen Druck entsprechend dem erfassten Pedalhub zu bestimmen.

3. System nach Anspruch 1, umfassend ein Steuerventil (9), das wirkverbunden zwischen der Stellglied-Baugruppe (7) und den Bremsvorrichtungen (B) angeordnet ist, verbunden mit einem Sensor (10), der angeordnet ist, um das Durchströmen von Fluid unter Druck von der Stellglied-Baugruppe (7) zum Steuerventil (9) zu erfassen und das Öffnen des Steuerventils (9) zu ermöglichen.

4. System nach Anspruch 3, umfassend einen weiteren hydraulischen Kreislauf (11), der zwischen dem Steuerventil (9) und den Bremsvorrichtungen (B) angeordnet ist, konfiguriert zum Modulieren des stromaufwärts erzeugten Fluiddrucks zu den jeweiligen Kraftfahrzeugrädern entsprechend der tatsächlichen Bodenhaftung des Kraftfahrzeugs.

5. Kraftfahrzeug, umfassend ein Bremssystem und ein System zum Erzeugen eines hydraulischen Betätigungsdrucks nach Anspruch 1.

6. Verfahren zum Erzeugen von hydraulischem Druck zum Betätigen von Bremsvorrichtungen (B) eines Kraftfahrzeug-Bremssystems, umfassend die folgenden Schritte:
- Bereitstellen eines Systems nach Anspruch 1,
- Erfassen eines Pedalhubs des Bremspedals (P) nach der Betätigung des Bremspedals (P),
- automatisches Bestimmen eines entsprechenden zu erzeugenden Betriebshydraulikdrucks;
- im Falle eines Ausfalls besagter Stellglied-Baugruppe (7), Steuern besagten Hilfselektromotors (16) zum Erzeugen besagten entsprechenden hydraulischen Drucks und Lenken des Fluids unter Druck zu den Bremsvorrichtungen (B) der Kraftfahrzeugräder.

## Revendications

1. Système pour générer une pression d'actionnement hydraulique de dispositifs de freinage (B) d'un système de freinage de véhicule automobile, comprenant :
- un circuit hydraulique (H) pouvant être connecté aux dispositifs de freinage (B) du véhicule automobile,
- un réservoir de fluide (3) connecté audit circuit hydraulique (H),
- un ensemble actionneur (7) comprenant un actionneur électromécanique (6) actionné par un moteur électrique (4) connecté fonctionnellement audit actionneur électromécanique (6), dans lequel ledit ensemble actionneur (7) est en communication hydraulique avec ledit réservoir de fluide (3) et les dispositifs de freinage (B), dans lequel ledit ensemble actionneur (7) est prévu pour diriger la pression de fluide vers les dispositifs de freinage (B),
- une unité de commande électronique (E) connectée fonctionnellement à une pédale de frein (P) du véhicule automobile, configurée pour recevoir un signal relatif à la course de la pédale de frein (P) et pour commander ledit moteur électrique (4) afin de générer une pression hydraulique correspondante,
- un système de sécurité auxiliaire pour générer une pression hydraulique en cas de défaillance dudit moteur électrique (4) et/ou dudit actionneur électromécanique (6),
- dans lequel ledit circuit hydraulique (H), ledit réservoir de fluide (3), ledit ensemble actionneur (7), ladite unité de commande électronique (E) et ledit système de sécurité auxiliaire sont intégrés dans une unité hydraulique et électromécanique unique (1), appelée « One Box », configurée pour générer et moduler la pression hydraulique de freinage,
ledit système étant **caractérisé en ce que** le système de sécurité auxiliaire comprend :
- un moteur électrique auxiliaire (16) connecté fonctionnellement à un actionneur auxiliaire (12),
- dans lequel ledit moteur électrique auxiliaire (16) et ledit actionneur auxiliaire (12) sont intégrés au sein de ladite unité hydraulique et électromécanique unique (1), communiquant hydrauliquement par l'intermédiaire dudit circuit hydraulique (H) avec ledit réservoir de fluide (3) et les dispositifs de freinage (B),
- dans lequel, en cas de ladite défaillance, l'unité de commande électronique (E) est configurée et programmée pour envoyer un signal de commande audit moteur électrique auxiliaire (16) afin de générer une pression hydraulique pour actionner les dispositifs de freinage (B) correspondant à ladite course de pédale, sans l'aide d'une connexion mécanique directe entre l'actionneur auxiliaire (12) et la pédale de frein (P).

2. Système selon la revendication 1, comprenant un capteur de position (17) pour détecter la position de la pédale de frein (P) et communiquer cette position à l'unité de commande électronique (E), dans lequel ladite unité de commande électronique (E) est programmée et configurée pour déterminer la pression hydraulique à générer correspondant à la course de pédale détectée.

3. Système selon la revendication 1, comprenant une vanne de commande (9) interposée fonctionnellement entre l'ensemble actionneur (7) et les dispositifs de freinage (B), associée à un capteur (10) agencé pour détecter le passage de fluide sous pression de l'ensemble actionneur (7) vers la vanne de commande (9) et pour permettre l'ouverture de la vanne de commande (9).

4. Système selon la revendication 3, comprenant un autre circuit hydraulique (11) interposé entre la vanne de commande (9) et les dispositifs de freinage (B), configuré pour moduler la pression de fluide générée en amont vers les roues respectives du véhicule automobile, en fonction de l'adhérence réelle du véhicule automobile sur le sol.

5. Véhicule automobile comprenant un système de freinage et un système pour générer une pression d'actionnement hydraulique selon la revendication 1.

6. Procédé pour générer une pression hydraulique pour actionner des dispositifs de freinage (B) d'un système de freinage de véhicule automobile, comprenant les étapes suivantes :
- fournir un système selon la revendication 1,
- détecter une course de pédale de la pédale de frein (P) suite à l'actionnement de la pédale de frein (P),
- déterminer automatiquement une pression hydraulique de fonctionnement correspondante à générer ;
- en cas de défaillance dudit ensemble actionneur (7), commander ledit moteur électrique auxiliaire (16) pour générer ladite pression hydraulique correspondante et diriger le fluide sous pression vers les dispositifs de freinage (B) des roues du véhicule automobile.
